(19) Europäisches Patentamt
European Patent Office
Office européen des brevets

(11) **EP 1 871 814 B1**

(12) **EUROPÄISCHE PATENTSCHRIFT**

(45) Veröffentlichungstag und Bekanntmachung des Hinweises auf die Patenterteilung:
**19.11.2008 Patentblatt 2008/47**

(21) Anmeldenummer: **06725019.1**

(22) Anmeldetag: **13.03.2006**

(51) Int Cl.:
*C08F 210/06* *(2006.01)*  *C08F 297/08* *(2006.01)*
*C08J 5/18* *(2006.01)*

(86) Internationale Anmeldenummer:
**PCT/EP2006/060648**

(87) Internationale Veröffentlichungsnummer:
**WO 2006/108744 (19.10.2006 Gazette 2006/42)**

(54) **HOCHVISKOSES, WEITGEHEND AMORPHES POLYOLEFIN**

HIGHLY VISCOUS, LARGELY AMORPHOUS POLYOLEFIN

POLYOLEFINE FORTEMENT VISQUEUSE ET LARGEMENT AMORPHE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.04.2005 DE 102005017201**

(43) Veröffentlichungstag der Anmeldung:
**02.01.2008 Patentblatt 2008/01**

(73) Patentinhaber: **Evonik Degussa GmbH**
**45128 Essen (DE)**

(72) Erfinder:
• **BECKER, Hinnerk, Gordon**
**45289 Essen (DE)**
• **WEY, Hans Günther**
**Singapore 098646 (SG)**

• **KILIAN, Wolfgang**
**45772 Marl (DE)**
• **STOJETZKI, Thomas**
**45768 Marl (DE)**
• **VORNHOLT, Marion**
**45701 Herten (DE)**
• **VEY, Marlies**
**45772 Marl (DE)**
• **DERKS, Jürgen**
**45894 Gelsenkirchen (DE)**
• **ZAGEFKA, Hans-Dieter**
**45721 Haltern am See (DE)**

(56) Entgegenhaltungen:
**EP-A- 0 335 484       EP-A- 0 729 984**
**US-A- 4 309 522       US-B1- 6 586 543**

## Beschreibung

Gegenstand der Erfindung ist ein Poly-$\alpha$-olefin, das gleichzeitig weitgehend amorph und hochmolekular ist und das sich aufgrund seiner Eigenschaften beispielsweise für den Einsatz in Polymerfilmen sowie Dämm- und Isolierfolien eignet. Um den Anforderungen in den beschriebenen Applikationsbereichen gerecht zu werden, muss ein besonderes Verhältnis von Molekulargewicht, Molekulargewichtsverteilung (Polydispersität), Verzweigungsgrad (Alpha-Wert), Kristallinität, Glasübergangstemperatur und Viskositätsverhalten (Strukturviskosität) vorliegen, das über die Monomerenzusammensetzung und die Parameter des Herstellungsverfahrens eingestellt werden kann. Gegenstand der Erfindung ist auch ein Herstellungsverfahren, mit dem derartige Poly-$\alpha$-olefine erhältlich sind

Weitgehend amorphe Poly-$\alpha$-olefine sind bereits lange bekannt. Schon in der DE-A-1 442 831 werden Katalysatorsysteme beschrieben, die aus dem Reaktionsprodukt eines Titantrihalogenids mit einer Aluminiumverbindung einerseits und einem Titanoxykohlenwasserstoff andererseits bestehen. Unter Verwendung dieses Katalysatorsystems werden amorphe Polyolefincopolymere erhalten. Dabei wird ausdrücklich darauf hingewiesen, dass amorphe Produkte sich nur mit der Titanoxykohlenwasserstoff-Komponente erhalten lassen. Die beschriebenen Katalysatoren weisen eine sehr geringe Aktivität auf, die den gesamten Prozess unökonomisch macht. Außerdem sind die beschriebenen Titanoxykohlenwasserstoffe in der Handhabung aufwendig.

In der DE-A-15 20 249, der DE-A-15 20 289 und der DE-A-17 95 620 wird beschrieben, dass sich amorphe Polyolefin-Co- bzw. -Terpolymerisate aus Ethen, einem $\alpha$-Olefin und einem Olefin mit "innerer" Doppelbindung (z. B. 2-Buten) erhalten lassen. Die dabei verwendeten Niederdruck-Polyolefin-Katalysatoren der ersten Generation zeigen jedoch eine äußerst geringe Aktivität, was zu einem sehr hohen Aschegehalt der Polymere führt. Außerdem werden wirklich amorphe Polymerisate nur mit Hilfe von Olefinen mit "innerer" Doppelbindung erhalten, was zu sehr langen Reaktionszeiten führt. Polymere mit hohen Molmassen und hohen Schmelzviskositäten lassen sich auf die beschriebene Weise nicht wirtschaftlich herstellen.

Aus der DE-A-23 06 667 ist bekannt, dass sich weitgehend amorphe Poly(1-buten)-Polymere nach dem Niederdruckpolymerisationsverfahren durch Polymerisation von 1-Buten, gegebenenfalls in Gegenwart anderer Olefine, bei Temperaturen von 40 bis 120 °C in Lösung mit Hilfe eines Mischkontaktes aus $TiCl_3 \cdot n \, AlCl_3$ (n = 0,2 - 0,6) und einem geeigneten Trialkylaluminium herstellen lassen. Dabei werden ausweislich der Beispiele Produkte mit Schmelzviskositäten von bis zu 184.000 mPa•s/170 °C erhalten. Diese Produkte weisen einen niedrigen Erweichungspunkt auf (im Beispiel 3 sind es 86 °C). Sie sind auf Grund ihrer niedrigen Schmelzviskosität sowie des niedrigen Erweichungspunktes nicht für die beabsichtigten Anwendungen geeignet.

In der DE-A-29 30 108 werden weitgehend amorphe 1-Buten-Propen-Ethen-Terpolymere mit hohem Erweichungspunkt auf ähnliche Art und Weise hergestellt, wobei ebenfalls ein Mischkontakt aus $TiCl_3 \cdot n \, AlCl_3$ (n = 0,3 - 0,35) sowie ein Trialkylaluminium als Cokatalysator verwendet werden. Dabei werden Produkte mit Schmelzviskositäten von 1.000 bis 100.000 mPa•s/190 °C erhalten. Diese Produkte weisen einen Erweichungspunkt von 90 bis 135°C. und eine Nadelpenetration von höchstens 25 • 0,1 mm auf. Sie sind auf Grund ihrer niedrigen Schmelzviskosität nicht für die beabsichtigten Applikationen geeignet.

In der DE-A-100 31 293 werden mit Hilfe eines auf Magnesiumchlorid-Trägerbasis hergestellten, mit Aluminiumtrichlorid sowie Titantetrachlorid vermahlenen Mischkatalysators, ebenfalls unter Zuhilfenahme eines Trialkylaluminium-Cokatalysators, weitgehend amorphe, weiche Polyolefine hergestellt, wobei der Mischkatalysator vor der Polymerisation durch Sauerstoff oder eine Verbindung, die aktiven Sauerstoff enthält, aktiviert wird. Dabei werden $\alpha$-Olefin-Copolymere mit Schmelzviskositäten von 300 bis 400.000 mPa•s /190 °C, sowie, alternativ, Copolymere höherer $\alpha$-Olefine (wie z.B. 1-Octen) mit gewichtsmittleren Molekulargewichten von bis zu 2.000.000 erhalten, die eine Nadelpenetration von 18 bis 90 • 0,1 mm aufweisen. Die beschriebenen Produkte sind für den Einsatz z. B. in Film- bzw. Folienanwendungen zu weich; sie weisen außerdem eine zu hohe Klebrigkeit bzw. plastische Deformierbarkeit auf. Ihre Verarbeitbarkeit ist auf Grund der sehr hohen Neigung dieser Polymerisate zu strukturviskosem Verhalten schwierig. Die beschriebenen Polymere mit Anteilen an höheren $\alpha$-Olefinen sind außerdem in der Konfektionierung problematisch; sie lassen sich nicht bzw. nur unter sehr hohem Aufwand granulieren. Der beschriebene geträgerte Katalysator ist zudem teuer.

In der EP-A-0 335 484 wird die Herstellung weitgehend amorpher $\alpha$-Olefin-Co- bzw. Terpolymerer unter Verwendung eines Mg-geträgerten Mischkatalysatorsystems beschrieben. Das eingesetzte Katalysatorsystem neigt stark zur Bildung von niedermolekularen Polymerbestandteilen, weshalb die Polymerisationstemperatur auf den sehr schmalen Bereich von 55 - 60 °C beschränkt ist. Die erhaltenen Polymerisate besitzen sehr niedrige Viskositäten (1.000 bis 8.000 mPa•s/190 °C) und sind daher für die beabsichtigten Anwendungen im Film- bzw. Folienbereich nicht geeignet.

In der DE-A-26 37 990 werden Terpolymere beschrieben, die einen Propengehalt von mindestens 93,2 Gew.-% sowie einen Ethenanteil von maximal 1,9 Gew.-% und einen 1-Buten-Anteil von maximal 4,9 Gew.-% aufweisen. Auch hier wird ein $TiCl_3$-Mischkontakt sowie ein als "Aktivator" bezeichneter Cokatalysator eingesetzt. Die Produkte sind zwar hochmolekular, sind jedoch weitgehend kristallin. Aufgrund ihrer Zusammensetzung weisen sie nur eine schlechte Verträglichkeit mit Polyethylen sowie eine unzureichende Mischbarkeit mit Bitumen auf.

Die JP-A-2000198892 beschreibt amorphe α-Olefin-Terpolymere mit einem Ethengehalt von 1 bis 49 Mol-%, einem Propengehalt von 50 bis 98 Mol-% und einem $C_4$-$C_{20}$-α-Olefingehalt von 1 bis 49 Mol-%. Diese weisen jedoch eine sehr enge Molekulargewichtsverteilung von maximal 4 auf, wodurch die Klebeigenschaften negativ beeinflusst werden. Außerdem zeigen sie bei DSC-Messungen keinen Schmelzpunkt, sind also vollständig amorph mit allen damit verbundenen Nachteilen wie schlechte Handhabbarkeit und geringe Wärmestandfähigkeit.

Gegenüber dem Stand der Technik stellte sich die Aufgabe, ein Polyolefin zur Verfügung zu stellen, das ein ausreichend hohes Molekulargewicht besitzt, um als Material einer Folienschicht verwendbar zu sein, und das eine gute Verträglichkeit bzw. gute Schichtenhaftung sowohl zu Polyethylen als auch zu Polypropylen besitzt. Das Polyolefin sollte zudem bei den üblichen Folienschichtdicken transparent sein, trotzdem aber ausreichend kristallin sein, um eine ausreichende Kohäsion und ein auch anspruchsvollen Anwendungen genügendes Verhältnis von Rückstellkraft zu Elastizität bzw. Plastizität zu besitzen. Es sollte zudem ausreichend Kristallinität vorhanden sein, um, sofern gewünscht, eine bei Umgebungstemperatur nicht klebende Oberfläche sowie eine zu vernachlässigende Kriechneigung sicherzustellen.

Diese Aufgabe wurde durch ein Polyolefin gelöst, das folgende Monomereinheiten enthält:

a) Maximal 25 Gew.-%, bevorzugt 0,1 bis 20 Gew.-% und besonders bevorzugt 1 bis 16 Gew.-% Einheiten, die sich von Ethen herleiten,

b) maximal 75 Gew.-%, bevorzugt 0,1 bis 70 Gew.-% und besonders bevorzugt 4 bis 65 Gew.-% Einheiten, die sich von Propen herleiten, wobei die Obergrenze dieser Einheiten in weiteren bevorzugten Ausführungsformen bei 60, 55 oder 50 Gew.-% liegt,

c) 5 bis 100 Gew.-%, bevorzugt 10 bis 95 Gew.-% und besonders bevorzugt 15 bis 90 Gew.-% Einheiten, die sich von einem α-Olefin mit 4 bis 20 C-Atomen herleiten,

wobei das Polyolefin folgende Parameter aufweist:

d) ein gewichtsmittleres Molekulargewicht im Bereich von 70.000 bis 10.000.000 g/mol, bevorzugt 85.000 bis 5.000.000 g/mol und besonders bevorzugt 100.000 bis 2.500.000 g/mol, wobei weitere bevorzugte Untergrenzen bei 120.000 g/mol bzw. 140.000 g/mol liegen,

e) eine Polydispersität im Bereich von 4 bis 60, bevorzugt im Bereich von 4,2 bis 40, besonders bevorzugt im Bereich von 4,5 bis 30, insbesondere bevorzugt im Bereich von 4,6 bis 20 und ganz besonders bevorzugt im Bereich von 4,8 bis 15,

f) eine Schmelzviskosität, gemessen durch Oszillationsrheometrie mit einer Schergeschwindigkeit von 1 Hz bei 190 °C, im Bereich von 100.000 bis 100.000.000 mPa•s, bevorzugt 200.000 bis 10.000.000 mPa•s und besonders bevorzugt 300.000 bis 5.000.000 mPa•s,

g) eine Nadelpenetration im Bereich von 3 bis 70 • 0,1 mm, bevorzugt im Bereich von 5 bis 35 • 0,1 mm und besonders bevorzugt im Bereich von 7 bis 25 • 0,1 mm,

h) eine Schmelzenthalpie im Bereich von 2 bis 100 J/g, bevorzugt im Bereich von 5 bis 75 J/g, besonders bevorzugt im Bereich von 10 bis 60 J/g und insbesondere bevorzugt im Bereich von 12 bis 50 J/g,

i) eine Glasübergangstemperatur $T_g$ im Bereich von -15 bis -80 °C, bevorzugt im Bereich von -20 bis -60 °C und besonders bevorzugt im Bereich von -25 bis -55 °C, sowie

j) ein Ende des Schmelzbereichs des kristallinen Anteils im Bereich von 85 bis 175 °C, bevorzugt im Bereich von 90 bis 173 °C und besonders bevorzugt im Bereich von 95 bis 170 °C.

Bevorzugt weist das Polyolefin einen Alpha-Wert im Bereich von 0,5 bis 0,9, bevorzugt im Bereich von 0,6 bis 0,9 und besonders bevorzugt im Bereich von 0,65 bis 0,85 auf.

Die Monomereinheiten gemäß a), b) und c) rühren vom Einbau des entsprechenden Olefins bei der Polymerisation bzw. Copolymerisation her. Das α-Olefin gemäß c) ist beispielsweise 1-Buten, 1-Penten, 1-Hexen, 1-Octen, 1-Decen, 1-Dodecen, 1-Octadecen, 3-Methyl-1-buten, ein Methylpenten wie z. B. 4-Methyl-1-penten, ein Methylhexen oder ein Methylhepten.

Die Polymerzusammensetzung wird über Hochtemperatur-$^{13}$C-NMR bestimmt. Die $^{13}$C-NMR-Spektroskopie von Polymeren ist beispielsweise in folgenden Publikationen beschrieben:

[1] S. Berger, S. Braun, H.-O. Kalinowski, $^{13}$C-NMR-Spektroskopie, Georg Thieme Verlag Stuttgart 1985
[2] A.E. Tonelli, NMR Spectroscopy and Polymer Microstructure, Verlag Chemie Weinheim 1989
[3] J.L. Koenig, Spectroscopy of Polymers, ACS Professional Reference Books, Washington 1992
[4] J.C. Randall, Polymer Sequence Determination, Academic Press, New York 1977
[5] A. Zambelli et al: Macomolecules, 8, 687 (1975)
[6] A. Filho, G.Galland: J.Appl.Polym.Sci., 80, 1880 (2001)

Die Eigenschaften Haftung (z. B. auf Polymeren des Polyethylen- bzw. Polypropylentyps), Heißsiegelbarkeit und Plastizität, die Mischbarkeit mit Bitumen sowie die Fähigkeit, eine Verträglichkeit zwischen Polyethylen und Polypropylen zu vermitteln, etwa um Folienmaterial mit hoher Transparenz zu erhalten, können über die Polymerzusammensetzung individuell eingestellt werden. Im Falle der anspruchsgemäßen Co- bzw. Terpolymere handelt es sich um weitgehend statistische Polymere. Bei der Verwendung von Propen als Monomer liegt der Anteil isotaktischer $C_3$-Triaden in einer bevorzugten Ausführungsform zwischen 20 und 85 %, bezogen auf die insgesamt vorhandenen $C_3$-Triaden, und besonders bevorzugt zwischen 35 und 70 %. Bei der Verwendung von 1-Buten als Monomer liegt der Anteil isotaktischer $C_4$-Triaden in einer bevorzugten Ausführungsform zwischen 10 und 75 %, bezogen auf die insgesamt vorhandenen $C_4$-Triaden, besonders bevorzugt zwischen 20 und 60 % und insbesondere bevorzugt zwischen 25 und 50 %. Diese Anteile lassen sich mittels Hochtemperatur-$^{13}$C-NMR bestimmen.

Die Bestimmung des Molekulargewichts erfolgt über Hochtemperatur-GPC. Die Bestimmung wird gemäß ASTM D6474-99 durchgeführt, jedoch bei einer höheren Temperatur (160 °C statt 140 °C) sowie einem geringeren Injektionsvolumen von 150 µl statt 300 µl. Als weitere Literatur zur GPC-Analyse von Polymeren sei angeführt:

H. G. Elias: "Makromoleküle"; Bd. 2; Wiley-VCH; Weinheim 2001;
Z. Grubisic, P. Rempp, H. Benoit; Polym. Lett.; 5; 753 (1967);
K.A. Boni, F.A. Sliemers, P.B. Stickney; J.Polym.Sci.;A2; 6; 1579 (1968);
D. Goedhart, A. Opschoor; J.Polym.Sci.;A2; 8; 1227 (1970);
A. Rudin, H.L.W. Hoegy; J.Polym.Sci.;A1; 10; 217 (1972);
G. Samay, M. Kubin, J. Podesva; Angew. Makromol. Chem.; 72; 185 (1978);
B. Ivan, Z. Laszlo-Hedvig, T. Kelen, F. Tüdos; Polym. Bull.;8; 311 (1982);
K.-Q. Wang, S.-Y. Zhang, J. Xu, Y. Li, H.P. Li; J. Liqu. Chrom.; 5; 1899 (1982);
T.G. Scholte, H.M. Schoffeleers, A.M.G. Brands; J. Appl. Polym. Sci.; 29; 3763 (1984).

Als Lösungsmittel wird Trichlorbenzol verwendet. Die Messung erfolgt bei einer Säulentemperatur von 160 °C. Die dabei für die Auswertung der Elutionskurven verwendete universelle Kalibrierung wird auf Basis von Polyolefin-Standards durchgeführt. Die Ergebnisse sind nicht mit Messungen vergleichbar, deren Kalibrierungen auf Basis von artfremden Polymeren - z. B. auf Polystyrol-Basis - erfolgte, oder die ohne universelle Kalibrierung erfolgt sind, da ansonsten ein unzulässiger Vergleich unterschiedlicher dreidimensionaler Polymerstrukturen bzw. hydrodynamischer Radien erfolgt. Auch der Vergleich mit Messungen, die andere als das angegebene Lösungsmittel verwenden, ist nicht zulässig, da in unterschiedlichen Lösungsmitteln unterschiedliche dreidimensionale Polymerstrukturen bzw. hydrodynamische Radien vorliegen können, die zu einem abweichenden Ergebnis bei der Molekulargewichtsbestimmung führen.

Die Polydispersität $P_d$ ist als Quotient von zahlenmittlerer und gewichtsmittlerer Molmasse definiert. Sie ist insbesondere ein Maß für die Breite der vorliegenden Molmassenverteilung, die wiederum Rückschlüsse auf das vorliegende Polymerisationsverhalten sowie den verwendeten Katalysator zulässt. Außerdem ist sie auch ein Maß für den vorhandenen niedermolekularen Anteil, der wiederum Einfluss auf die Haftungseigenschaften der Polymermaterialien hat. Sie wird über Hochtemperatur-GPC bestimmt. Die Polydispersität ist in gewissen Grenzen für eine bestimmte Katalysator-Cokatalysator-Kombination charakteristisch. Die Molmassenverteilung kann dabei je nach verwendeter Verfahrensweise (z. B. 1, 2 oder mehr Rührkessel bzw. Kombinationen aus Rührkessel und Strömungsrohr) bzw. Reaktionsführung (Einfach- bzw. Mehrfachdosierung von Katalysator, Cokatalysator und Monomeren) entweder mono-, bi- oder multimodal sein. Die Polydispersität hat einen relativ starken Einfluss auf die Klebrigkeit des Materials bei Raumtemperatur sowie auf die Haftung.

Bei der Bestimmung der Molmassen mittels Gel-Permeations-Chromatographie (GPC) spielt der hydrodynamische Radius der in Lösung vorliegenden Polymerketten eine besondere Rolle. Als Detektionsmechanismen werden neben Wärmeleitfähigkeits-, RI- (Brechungsindex) bzw. UV/VIS- und FTIR- oder Lichtstreuungsdetektoren auch Viskositätsdetektoren eingesetzt. Betrachtet man die Polymerkette in Lösung als ungestörtes Knäuel, so lässt sich die Beziehung zwischen ihrer Grenzviskositätszahl und der Molmasse empirisch durch die sog. KMHS-Gleichung

$$[\eta] = K_V M_V^{\alpha}$$

beschreiben (H.-G. Elias, Makromoleküle, Band 2, 6. Auflage, Wiley-VCH, Weinheim 2001, S. 411-413). $K_V$ und $\alpha$ sind dabei Konstanten, die sowohl von der Konstitution, Konfiguration und Molmasse des Polymeren beeinflusst werden als auch vom Lösungsmittel und der Temperatur. Die wesentliche Aussage des Alpha-Wertes im vorliegenden Fall ist die des hydrodynamischen Radius; dieser hängt von den an den Polymerketten befindlichen Verzweigungsstellen ab. Bei einer geringen Verzweigung ist der Alpha-Wert hoch, bei einer höheren Verzweigung niedrig.

Die Schmelzviskosität wird gemäß ASTM D4440-1 durch Oszillationsrheometrie bestimmt, wobei mit einer Schergeschwindigkeit von 1 Hz gearbeitet wird. Die maximale Deformation der Probe wird so gewählt, dass sich die Probe während der gesamten Messdauer im linear viskoelastischen Bereich befindet. Viskoelastische Materialien zeichnen sich gegenüber Hookschen Festkörpern durch die Fähigkeit aus, aus einer Deformation resultierende Spannungen über eine bestimmte Zeit dissipativ abzubauen (Relaxation). Im Gegensatz zu Newtonschen Flüssigkeiten, die unter Einwirkung einer Scherung bzw. Dehnung einer ausschließlich irreversiblen Verformung unterliegen, können viskoelastische Fluide einen Teil der Deformationsenergie zurückgewinnen, nachdem die einwirkende Kraft entfernt wurde (sog. "Memory Effekt") [N.P.Cheremisinoff; "An Introduction to Polymer Rheology and Processing"; CRC Press; London; 1993]. Ein weiteres Kennzeichen polymerer Schmelzen ist das Auftreten einer sogenannten Strukturviskosität. Als solche bezeichnet man ein Verhalten, bei dem die Schubspannung als auftretende Kraft die Ausgangsstruktur des Materials in Abhängigkeit von der Schergeschwindigkeit abbaut. Da dieser Abbauprozess eine Mindestschergeschwindigkeit voraussetzt, fließt das Material unterhalb dieser Schergeschwindigkeit wie eine Newtonsche Flüssigkeit. Eine Erklärung liefert das Prinzip von Le Chatelier, wobei das "Ausweichen" der strukturviskosen Flüssigkeit (vor der mechanischen Beanspruchung) in der Ausrichtung entlang der Schubflächen zur Verminderung des Reibungswiderstandes besteht. Letzteres führt zum Abbau der Gleichgewichtsstruktur des Anfangszustandes und zum Aufbau einer schuborientierten Struktur, was wiederum ein erleichtertes Fließen (Viskositätsverminderung) zur Folge hat. In Polymerschmelzen ist der newtonsche Bereich nur bei sehr kleinen Schergeschwindigkeiten bzw. kleinen Scheramplituden wahrnehmbar. Seine Bestimmung ist über rheometrische Testmethoden (Amplituden-"Sweeps", d.h. Messung bei fester Frequenz in Abhängigkeit von der Scheramplitude) möglich und notwendig, wenn die Messung im reversiblen, d.h. reproduzierbaren Bereich durchgeführt werden soll [R.S.Lenk; "Rheologie der Kunststoffe"; C.Hanser Verlag; München; 1971; J.Meissner; "Rheologisches Verhalten von Kunststoff-Schmelzen und -Lösungen" in: "Praktische Rheologie der Kunststoffe"; VDI-Verlag; Düsseldorf; 1978; J.-F. Jansson; Proc.8th.Int.Congr.Rheol.; 1980; Vol.3]. Die Schwingungsrheometrie ist auf Grund ihrer geringen Krafteinwirkung, ihrer geringen Deformation und der somit geringen Auswirkung auf die Probenmorphologie besonders gut zur Untersuchung von Materialien geeignet, die ein stark strukturviskoses Verhalten zeigen. Die Strukturviskosität ist erst im Bereich ab 200.000 mPa•s stärker ausgeprägt. Nimmt man als Maßstab das Verhältnis der Schmelzviskositäten, die bei einer Schergeschwindigkeit von 10 Hz und einer Schergeschwindigkeit von 0,1 Hz bestimmt wurden, so liegt dieses Verhältnis für die beanspruchten Polymere üblicherweise zwischen 1 : 2 und 1 : 1000, bevorzugt zwischen 1 : 3 und 1 : 500 und besonders bevorzugt zwischen 1 : 5 und 1 : 50. Als rheologisches Kennzeichen des Verarbeitungsfensters (z. B. auf Kalandern oder auch in Schneckenmaschinen) sowie des besonderen Verhältnisses von molekularen Größen, wie z. B. der Molmasse und makroskopischen Materialeigenschaften wie etwa der Schmelzviskosität, kann das Verhältnis von Speichermodul zu Verlustmodul herangezogen werden. Dieses Verhältnis liegt für die anspruchsgemäßen Polymerisate bei einer Schergeschwindigkeit von 1 Hz im Temperaturbereich vom Ende des Schmelzbereichs bis 200 °C zwischen 1 : 1 und 1 : 100, bevorzugt zwischen 1 : 1,5 und 1 : 50 und besonders bevorzugt zwischen 1 : 2 und 1 : 20.

Die Nadelpenetration wird gemäß DIN EN 1426 bestimmt. Sie lässt sich ebenfalls auf bekannte Weise über die Monomerzusammensetzung und die Reaktionsbedingungen steuern.

Die Bestimmung der Schmelzenthalpie, der Glasübergangstemperatur und des Schmelzbereichs des kristallinen Anteils erfolgt über Differentialkalorimetrie (DSC) gemäß DIN 53 765 aus der 2. Aufheizkurve bei einer Heizrate von 10 K/min. Der Wendepunkt der Wärmestromkurve wird als Glasübergangstemperatur ausgewertet. In einer besonderen Ausführungsform liegt diese im Bereich von -40 bis -80 °C. Die Glasübergangstemperatur lässt sich auf bekannte Weise über die Monomerzusammensetzung und die Reaktionsbedingungen steuern. Generell führt die Verwendung von längerkettigen Monomeren zu niedrigeren Glasübergangstemperaturen. Ebenso führen Reaktionsbedingungen, bei denen sich auch kürzerkettige Polymere bilden (beispielsweise relativ hohe Polymerisationstemperaturen) in einem bestimmten Rahmen ebenfalls zur Absenkung der Glasübergangstemperatur. Die Schmelzenthalpie ist ein Maß für die Kristallinität des Polymeren. Die anspruchsgemäßen Polymere weisen eine relativ geringe Kristallinität auf, d. h. sie sind weitgehend, jedoch nicht vollständig, amorph. Es ist eine gewisse Kristallinität vorhanden, die für die geforderten Materialeigenschaften unabdingbar ist. Die beim Aufschmelzen detektierbaren kristallinen Bereiche erstrecken sich über einen großen Temperaturbereich von 20 bis 175 °C und sind von ihrer Intensität her je nach Lage unterschiedlich ausgeprägt. Die anspruchsgemäßen Polymerisate zeichnen sich in ihrer Kristallinität durch das Auftreten sowohl mono- als auch bi- und multimodaler Aufschmelzpeaks aus, die zum Teil scharf getrennt sind, zum Teil ineinander übergehen. Besonders bevorzugt sind Polymerisate mit bi- und multimodalen Aufschmelzpeaks. In einer möglichen Ausführungsform liegt die Schmelzenthalpie (als Maßstab für die Gesamtkristallinität) zwischen 2 J/g und 10 J/g. Durch die niedrige Kristallinität kann einerseits eine hohe Transparenz, andererseits ein spezielle Kombination von vorteilhaften Materialeigenschaften erreicht werden. Niedrig kristalline Polyolefine zeigen eine relativ hohe Oberflächenklebrigkeit (Adhäsion) bei Raumtemperatur, was z.B. für Zwischenlagen in Mehrschichtfolien vorteilhaft ist. Außerdem zeigen sie insgesamt ein flexibleres mechanisches Verhalten. Allerdings ist die Kohäsion solcher Materialien relativ gering, weshalb diese niedrigen Kristallinitäten nicht generell angestrebt werden. In einer weiteren möglichen Ausführungsform liegt die Schmelzenthalpie zwischen 10 J/g und 30 J/g, bevorzugt zwischen 15 J/g und 28 J/g. Durch die höhere Kristallinität kann eine besondere Kombination vorteilhafter Materialeigenschaften erzielt werden. Erfindungsgemäße Polymere mit relativ hohen Kristallinitäten, wie z.B. Polybuten bzw. Buten-Copolymere mit hohen Butenanteilen, weisen z.B. sehr gute Zugfestigkeiten auf. Gleichzeitig zeigen sie eine relativ geringe Oberflächenklebrigkeit, was z.B. bei Monolayerfilmen vorteilhaft ist.

Die anspruchsgemäßen Polymerisate weisen in vielen Fällen eine ausgeprägte Neigung zur Kaltkristallisation auf, wobei diese in einem Temperaturbereich von -10 bis 100 °C auftritt. Zur Beschleunigung der Kristallisation bzw. zur gezielten Einstellung bestimmter Kristallmodifikationen ist der Einsatz bekannter Nukleierungsmittel möglich, wie sie z. B. bei isotaktischen Polypropylenen eingesetzt werden. Diese können sowohl anorganischer als auch organischer Natur sein, sowie sowohl nieder- als auch hochmolekulare Komponenten enthalten, wobei in allen Fällen sowohl kristalline als auch amorphe Nukleierungsmittel eingesetzt werden können.

Die Kristallinität kann, dem Stand der Technik entsprechend, auch über die Löslichkeit in Xylol bestimmt werden. Hierbei wird ein Xylol-Isomerengemisch verwendet, wobei das Polymere unter Rückfluss gelöst und dann die Lösung auf Raumtemperatur abgekühlt wird. Die Löslichkeit in Xylol liegt beim anspruchsgemäßen Polyolefin vorzugsweise zwischen 80 und 99,5 %, besonders bevorzugt zwischen 85 und 99 % und insbesondere bevorzugt zwischen 90 und 98 %. Die Bestimmung erfolgt so wie im experimentellen Teil beschrieben.

Das anspruchsgemäße hochviskose, weitgehend amorphe Polyolefin ist beispielsweise durch Polymerisation von $\alpha$-Olefin-Monomeren mit einem $TiCl_3 \cdot (AlCl_3)_n$-Mischkatalysator (n = 0,2 bis 0,5) erhältlich, wobei eine Trialkylaluminiumverbindung (etwa Triethylaluminium, bevorzugt Trüsopropylaluminium, besonders bevorzugt Triisobutylaluminium) als Cokatalysator eingesetzt wird. Dabei muss ein besonderes Verhältnis von Katalysator zu Cokatalysator gewählt werden, um die beschriebenen Produkte mit den beschriebenen Eigenschaften zu erhalten. Das molare Verhältnis von Katalysator zu Cokatalysator liegt zwischen 1 : 1 und 1 : 10. Die Aktivität des verwendeten Katalysators liegt dabei zwischen 5.000 und 20.000 g Polymer/g Katalysator. Das Monomer Ethen wird gasförmig eingesetzt, während die Monomere Propen und 1-Buten sowohl gasförmig als auch flüssig eingesetzt werden können. Höhere Homologe werden flüssig eingesetzt. Werden Propen und/oder 1-Buten flüssig eingesetzt, so muss im verwendeten Reaktor ein den Reaktionsbedingungen entsprechender Druck gehalten werden, welcher eine ausreichende Monomerkonzentration in der flüssigen Phase gewährleistet. Als Molmassenregler kommt gasförmiger Wasserstoff zum Einsatz. Die Polymerisation wird in einem inerten Lösungsmittel durchgeführt, welches z. B. aus der Gruppe der aliphatischen Kohlenwasserstoffe ausgewählt ist. Das Massenverhältnis von Polymerisat zu Lösungsmittel beträgt zwischen 1 : 100 und 1 : 0,01, bevorzugt zwischen 1 : 50 und 1 : 0,1 und besonders bevorzugt zwischen 1 : 10 und 1 : 0,2. In einer speziellen Ausführungsform liegt es zwischen 1 : 1 und 1 : 0,01. Eine Polymerisation im vorgelegten Monomer ist ebenfalls möglich. Die Polymerisation wird entweder in einem Rührkessel oder in einer Rührkesselkaskade durchgeführt; in einer besonderen Ausführungsform kann auch ein Strömungsrohr bzw. ein rohrförmiger Reaktor mit Zwangsförderung (z. B. eine Schneckenmaschine) verwendet werden. Die Verwendung des rohrförmigen Reaktors mit Zwangsförderung kann entweder als alleinige Lösung oder in Kombination mit Rührkessel oder Rührkesselkaskade erfolgen. Hierbei sind sowohl eine Reihen- als auch eine Parallelschaltung der einzelnen Reaktoren möglich. Die Reaktionstemperatur liegt zwischen 30 und 200 °C, bevorzugt zwischen 70 und 150 °C und besonders bevorzugt zwischen 80 und 130 °C. In einer möglichen Ausführungsform, insbesondere wenn eine geringe Polydispersität angestrebt wird, liegt die Reaktionstemperatur zwischen 30 und 80 °C, bevorzugt zwischen 40 und 60 °C und besonders bevorzugt zwischen 40 und 50 °C. In einer weiteren möglichen Ausführungsform, insbesondere wenn eine hohe Polydispersität angestrebt wird, liegt die Reaktionstemperatur zwischen 80 und 200 °C, bevorzugt zwischen 100 und 200 °C und besonders bevorzugt zwischen 110 und 190 °C. Katalysator und Cokatalysator werden am Ende der Reaktion in geeigneter Weise zersetzt, wobei die zersetzten Katalysatorbestandteile entweder im Polymerisat verbleiben oder über einen Waschschritt entfernt werden. In der Praxis erfolgt die Zersetzung üblicherweise dergestalt, dass die in unreaktive Bestandteile überrührten zersetzten Katalysatorkomponenten zumindest teilweise im Polymerisat verbleiben. Dabei wird das Polymerisat durch die in unreaktive Bestandteile überführten zersetzten Katalysatorkomponenten im erfindungsgemäßen Herstellungsprozess nicht eingefärbt. Die erfindungsgemäßen Polymerisate können dem Stand der Technik entsprechend entweder in Form ihrer Reaktionslösung oder zu einem späteren Zeitpunkt chemisch stabilisiert werden, um sie vor dem schädigenden Einfluss von höheren Temperaturen, Sonneneinstrahlung, Luftfeuchtigkeit und Sauerstoff zu schützen. Dabei können beispielsweise Stabilisatoren, die gehinderte Amine (HALS-Stabilisatoren), gehinderte Phenole, Phosphite, UV-Absorber wie z. B. Hydroxybenzophenone, Hydroxyphenylbenzotriazole und/oder aromatische Amine enthalten, zum Einsatz kommen. Die wirksame Menge an Stabilisatoren liegt dabei normalerweise im Bereich von 0,1 bis 2 Gew.-%, bezogen auf das Polymer.

In besonderen Fällen, insbesondere bei einschichtigen Folien, können sogenannte Antifoggingsubstanzen als Zusatzstoffe eingesetzt werden. Dabei können z. B. Fettsäureester und/oder Glycerinmono- bzw. Glycerindioleate zum Einsatz kommen; die wirksame Konzentration liegt in der Regel im Bereich von 0,1 bis 2 Gew.-%, bezogen auf das Polymer. Das anspruchsgemäße Polymer wird nach der Polymerisation entweder durch Ausfällen in einem gegenpolaren Fällungsmittel (etwa Alkohol wie z. B. Methanol oder Butanol) oder durch direkte Entgasung mit anschließendem Aufschmelzvorgang erhalten. Dabei können in beiden Fällen sowohl Rührkessel als auch Rührkesselkaskaden oder Strömungsrohre bzw. rohrförmige Reaktoren mit Zwangsförderung (beispielsweise eine Schneckenmaschine) verwendet werden. Bei letzterem ist insbesondere der Einsatz von mehrwelligen Schneckenmaschinen bevorzugt, beispielsweise von solchen mit Zentralspindel. Auch der Einsatz von klassischen Verdampfungsapparaten, wie z. B. Fallfilm- und/oder Dünnschichtverdampfern, ist möglich. Die Konfektionierung erfolgt beispielsweise über eine Granulierung oder eine Pulverisierung. Als Methoden der Granulierung sind z. B. die Unterwasserstrang- oder die Unterwasser-Vorkopfgranulierung möglich. Gegebenenfalls ist der Einsatz eines Tensides und/oder Dispergierhilfsmittels bzw. einer Trennmittelemulsion notwendig. Auch der Einsatz verflüssigter oder tiefkalter Gase, wie z. B. $CO_2$ und/oder $N_2$, als Kühlmittel ist möglich. Die Pulverisierung kann entweder durch einen separaten Mahlschritt oder durch Einsatz einer Versprühungsmethode erfolgen. In beiden Fällen ist auch der Einsatz von überkritischen Fluiden wie z. B. $CO_2$, Wasser oder Propan möglich. Bei diesem z.B. unter dem Namen PGSS bekannten Verfahren wird die Polymerschmelze mit einem überkritischen Medium vermischt und anschließend in einem Sprühturm verdüst. Dabei lassen sich durch die Düsen- und Turmgeometrie die Korngrößen steuern. Der Mahlprozess kann auch unter Verwendung tiefkalter Gase wie z. B. $CO_2$ und/oder $N_2$ erfolgen.

Um die Fließfähigkeit des Granulats und/oder Pulvers zu gewährleisten, können die im Polymerbereich üblicherweise verwendeten Fließhilfsmittel eingesetzt werden. Diese können sowohl anorganischer als auch organischer Natur sein sowie sowohl nieder- als auch hochmolekulare Komponenten enthalten, wobei in allen Fällen sowohl kristalline als auch amorphe Fließhilfsmittel eingesetzt werden können. Die Fließhilfsmittel können mit den anspruchsgemäßen Polyolefinen im Sinne der thermodynamischen Mischbarkeit sowohl verträglich als auch unverträglich sein. Besonders bevorzugt sind dabei Fließhilfsmittel, die mit den anspruchsgemäßen Polyolefinen verträglich sind. Als Fließhilfsmittel können z.B. Polyolefinwachse (sowohl auf Polyethylen- als auch auf Polypropylenbasis) als auch Fischer-Tropsch-Wachse eingesetzt werden. Auch Polyolefinwachse auf 1-Butenbasis können eingesetzt werden. Ebenso ist der Einsatz von Mikrowachse möglich. Neben Wachsen können auch Olefinpolymere wie z.B. Polyethylen, Polypropylen und/oder Poly(1-buten), insbesondere isotaktisches oder syndiotaktisches Polypropylen, eingesetzt werden. Sowohl Wachse als auch Polymere können auch in modifizierter Form (z. B. mit Maleinsäureanhydrid modifiziert) verwendet werden. Auch der Einsatz vernetzter Polymere wie z.B. vernetzter Polyolefine oder vernetzter Styrol-Divinylbenzol-Polymerisate im pulverisierten Zustand ist möglich. Als anorganische Materialien kommen z.B. MgO, Talkum, Kieselsäure usw. in Frage.

Die anspruchsgemäßen Polyolefine lassen sich vorteilhaft in Folien einsetzen, wobei entweder eine einschichtige Folie das anspruchsgemäße Polyolefin enthält bzw. daraus besteht, oder eine mehrschichtige Folie eine oder mehrere Schichten besitzt, die das anspruchsgemäße Polyolefin enthalten oder daraus bestehen. Bei derartigen Folien lassen sich die anspruchsgemäßen Polyolefine insbesondere vorteilhaft als Modifikator eines Ethylenpolymerisats, Propylenpolymerisats oder Poly-1-butens oder als Verträglichkeitsvermittler in Mischungen aus Ethylenpolymerisaten und Propylenpolymerisaten bzw. Poly-1-buten einsetzen. Hierdurch werden verbesserte mechanische Eigenschaften der Mischung sowie eine verbesserte Transparenz erhalten. Entsprechende Mischungen, die folgende Komponenten enthalten:

I. 0,1 bis 99,9 Gew.-%, bevorzugt 1 bis 99 Gew.-%, besonders bevorzugt 5 bis 95 Gew.-% und insbesondere bevorzugt 10 bis 90 Gew.-% des anspruchsgemäßen Polyolefins sowie

II. 99,9 bis 0,1 Gew.-%, bevorzugt 99 bis 1 Gew.-%, besonders bevorzugt 95 bis 5 Gew.-% und insbesondere bevorzugt 90 bis 10 Gew.-% eines Polyolefins, ausgewählt aus der Gruppe Ethylenpolymerisat, isotaktisches Propylenpolymerisat, syndiotaktisches Propylenpolymerisat, isotaktisches Poly-1-buten und syndiotaktisches Poly-1-buten,

wobei sich die Prozentangaben auf die Mischung der Komponenten I und II beziehen, sind ebenfalls Gegenstand der vorliegenden Erfindung. In einer bevorzugten Ausführungsform ist die Komponente gemäß II. eine Mischung aus einem Ethylenpolymerisat und einem oder mehreren der anderen genannten Polyolefine.

Folienschichten, die das anspruchsgemäße Polyolefin enthalten oder daraus bestehen, können auch zur Erzielung einer besonders guten Haftung auf Polyethylen-, Polypropylen- oder anderen Kunststoffoberflächen (insbesondere ABS, SAN, Polystyrol, Polycarbonat, PMMA) oder auch auf Metall-, Papier- oder Textiloberflächen eingesetzt werden. Bei Verwendung der anspruchsgemäßen Polyolefine entweder als solche oder in Mischungen lassen sich bei Folienanwendungen besonders gute Heißsiegel- und Wärmeschrunpfeigenschaften einstellen. Je nach Zusammensetzung und Kristallinitätsgrad können die Folien, sofern gewünscht, auch eine hohe Wärmeformbeständigkeit aufweisen. Die Folien weisen an sich eine hohe Wasserdampfbarriere auf; durch Perforation oder den Einbau anorganischer Bestandteile kann die Wasserdampfbarrierewirkung jedoch verringert werden. Die Herstellung der Folien kann durch alle gängigen technischen Herstellungsverfahren erfolgen, z. B. als Blasfolie, Castfolie, durch Extrusion oder Coextrusion, durch Kalandrieren usw. Es können sowohl orientierte (mono- bzw. bi- oder multiaxial) als auch unorientierte Folien hergestellt werden. Auch die Verwendung als Coating von Polyethylen- und/oder Polypropylenschichten bei der Folienherstellung ist mit eingeschlossen, z. B. durch Sprühauftrag von Polymerschmelze oder Polymerpulver, Rakelauftrag usw. Die hergestellten Folien können in den Bereichen Verpackung, z. B. (wiederverschließbare) Lebensmittelverpak-

kungen (mit oder ohne Wärmeschrumpfung, Aromaschutzverpackungen, Geruchsbarrieren usw.) sowie als Schutzfolien (z. B. für Kunststoffoberflächen) oder Abdeckfolien Verwendung finden.

Eine weitere Anwendung sind Dichtungsbahnen. Diese umfassen sowohl die Bereiche Dachabdichtungen als auch die Bereiche Brückenabdichtungen und andere artverwandte Anwendungen. Hierbei ist insbesondere die gute Mischbarkeit mit den in diesem Bereich verwendeten Bitumenarten hervorzuheben. Die Dichtungsbahnen können folgende Bestandteile enthalten: Bitumen, Klebharze wie z.B. aliphatische und/oder aromatische Kohlenwasserstoffharze, ataktisches Polypropylen, anorganische und/oder organische Füllstoffe wie z.B. Split, Kunststoffmischrecyclate, Quarzsand und/oder Talkum. Es ist außerdem die Verwendung eines Inliners möglich, der z.B. aus Glasfasern bzw. Glasfaservliesen und/oder Polymerfasern bzw. Polymerfaservliesen bestehen kann. Darüber hinaus können Formmassen hergestellt werden, die zu beispielsweise spritzgegossenen, extrudierten oder blasgeformten Formteilen weiterverarbeitet werden sollen. Derartige Formmassen enthalten bevorzugt folgende Komponenten:

I. 0,1 bis 99,9 Gew.-%, bevorzugt 1 bis 99 Gew.-%, besonders bevorzugt 5 bis 95 Gew.-% und insbesondere bevorzugt 10 bis 90 Gew.-% des anspruchsgemäßen Polyolefins sowie

II. 99,9 bis 0,1 Gew.-%, bevorzugt 99 bis 1 Gew.-%, besonders bevorzugt 95 bis 5 Gew.-% und insbesondere bevorzugt 90 bis 10 Gew.-% eines Polyolefins, ausgewählt aus der Gruppe Ethylenpolymerisat, isotaktisches Propylenpolymerisat, syndiotaktisches Propylenpolymerisat, isotaktisches Poly-1-buten und syndiotaktisches Poly-1-buten,

wobei sich die Prozentangaben auf die Mischung der Komponenten I und II beziehen. Derartige Formmassen sind ebenfalls Gegenstand der Erfindung. Ethylenpolymerisate sind in erster Linie HDPE, LDPE, LLDPE und UHMWHDPE, während Propylenpolymerisate in erster Linie Homopolypropylen oder statistische bzw. blockartig aufgebaute Copolymere mit Ethylen und/oder 1-Buten darstellen. Bei derartigen Formmassen werden die mechanischen Eigenschaften des oder der Polymeren der Komponente II, beispielsweise die Schlagzähigkeit und die Flexibilität, insbesondere bei tiefen Temperaturen, durch das Zumischen der Komponente I positiv beeinflusst.

Bei Mischungen von isotaktischem und ataktischem Polypropylen gemäß dem Stand der Technik ist festzustellen, dass praktisch alle wichtigen Materialeigenschaften sowohl vom Molekulargewicht als auch vom Gehalt an ataktischem Polypropylen abhängen. Besonders prägnant verhalten sich die Materialgrößen Reißfestigkeit, Reißdehnung und Kerbschlagzähigkeit. Während alle drei Materialgrößen mit zunehmendem Molekulargewicht ansteigen, sinkt die Reißfestigkeit mit zunehmendem ataktischen Anteil. Reißdehnung und Kerbschlagzähigkeit steigen hingegen. Allgemein besteht ein großer Einfluss der Herstellungsbedingungen von Fertigteilen (z. B. aus Spritzguss) auf die Materialeigenschaften. Dabei spielen vor allem die Abkühlgeschwindigkeit und die Molekülorientierung eine entscheidende Rolle, da diese beiden Faktoren mitverantwortlich für die Ausbildung des kristallinen Gefügezustandes sind.

Schlagzähmodifizierte Polypropylenblends sind in der technischen Literatur hinreichend studiert worden. Am häufigsten wird Polypropylen mit Ethen-Propen-Kautschuk (EPR) oder EPDM schlagzähmodifiziert. Zufriedenstellende Ergebnisse lassen sich außerdem auch mit Styrol-Butadien-Styrol (SBS), Styrol-Ethylen-Butylen-Styrol (SEBS), Ethylen-Butylen-Kautschuk (EBR), Styrol-Butadien-Acrylnitril (ABS), Polybutadien, Polybutylacrylat, Polyurethanen oder Polyisopren erzielen. Obwohl Polypropylen nicht mit Ethen-Propen-Kautschuk oder EPDM mischbar ist, besteht eine gewisse Haftung zwischen den Phasen. Die Schlagzähmodifizierung erfolgt im Allgemeinen, indem eine mit der Polymermatrix (z.B. isotaktisches Polypropylen) nicht mischbare Kautschukkomponente fein in der Matrix verteilt wird. Dabei ist das Deformationsverhalten der verteilten Kautschuk-Partikel im wesentlichen für die Morphologie des hergestellten Blends bzw. Compounds sowie die Materialeigenschaften verantwortlich. Da die Partikelgröße im Bereich < 1 μm liegen muss, um gute Materialeigenschaften zu erzielen, ist ein großer Mischaufwand notwendig.

Eine intensive Auseinandersetzung mit der Phasenstruktur sowie den Schlagzäheigenschaften von iPP/EPR-Blends findet sich z.B. in: L. D'Orazio, C. Mancarella, E. Martuscelli, G. Sticotti, P. Massari; Polymer; 34(17); 3671-81 (1993).

Formmassen auf Basis von kristallinem Polypropylen und aktaktischem Polypropylen sind in der JP-A-58089635 und der JP-A-45012225 beschrieben, während Formmassen auf Basis von kristallinem Polypropylen und EPR beispielsweise in der DE-A-1 104 694 und der WO 03/076511 beschrieben sind. Die EP-A-1 176 169 offenbart eine elastomere transparente Mischung aus einem kristallinen Polypropylen mit einem amorphen Propylenpolymer und einer Elastomerkomponente. Das ataktische bzw. amorphe Propylenpolymer ist dabei bevorzugt ein Homopolymer, kann aber auch ein Co- bzw. Terpolymer mit Ethylen- und/oder 1-ButenAnteilen von bevorzugt 0,5 bis 13 Mol-% sein. Die Polydispersität des ataktischen Propylenpolymers liegt bei < 5, bevorzugt < 4, am meisten bevorzugt < 3 und wird mit Hilfe eines Metallocenkatalysators erzielt

Die gängigen Arten der Schlagzähmodifizierung führen bei Polypropylenblends bzw. -compounds im allgemeinen zu starker Verringerung von Härte, Steifigkeit und insbesondere zu einer wesentlichen Verschlechterung der thermoplastischen Verarbeitbarkeit. Beim Einsatz von Kautschuken wird insbesondere die Recyclingfähigkeit der Formmassen stark eingeschränkt; außerdem kommt es häufig zu einer Verschlechterung der Transparenz.

Gegenstand der Erfindung ist in einer besonderen Ausführungsform eine Formmasse, die folgende Komponenten enthält:

I. 0,1 bis 50 Gew.-%, bevorzugt 0,5 bis 30 Gew.-%, besonders bevorzugt 1 bis 20 Gew.-% und insbesondere bevorzugt 2 bis 16 Gew.-% des anspruchsgemäßen Polyolefins sowie

II. 50 bis 99,9 Gew.-%, bevorzugt 70 bis 99,5 Gew.-%, besonders bevorzugt 80 bis 99 Gew.-% und insbesondere bevorzugt 84 bis 98 Gew.-% eines isotaktischen oder syndiotaktischen Propylenpolymerisats,

wobei sich die Prozentangaben auf die Mischung der Komponenten I und II beziehen.

Durch diese Formmasse kann eine Verbesserung der Versprödungseigenschaften bei tiefen Temperaturen beim verwendeten kristallinen Polypropylen erreicht werden. Außerdem werden Schlagzähigkeit und Reißdehnung signifikant erhöht, wobei Materialien mit hoher Transparenz hergestellt werden können. Diese Mischungen sind leicht verarbeitbar.

Die Formmasse wird bevorzugt in einem Extrusionsprozess hergestellt. Dabei kann der Blendvorgang sowohl in einem Doppelschneckenextruder (mit gleich- oder gegenlaufenden Schnecken) und/oder in einem Einschneckenextruder mit Mischungselementen durchgeführt werden.

In einer besonderen Ausführungsform ist auch die Verwendung eines Reaktorblends aus kristallinem und weitgehend amorphem Material möglich. Dabei wird entweder das weitgehend amorphe Polymerisat z.B. in Form einer Lösung und/oder Schmelze in den Polymerisationsreaktor der isotaktischen oder syndiotaktischen Polymerisation eingespeist, oder aber es findet eine Polymerisation beider Polymerisate im gleichen Prozess statt, wobei die Polymerisation entweder in getrennten Reaktionsbehältern oder im gleichen Reaktionsbehälter durchgeführt werden kann. Als Polymerisationsprozesse kommen sowohl Lösungspolymerisation als auch Slurrypolymerisation als auch die Polymerisation im Wirbelbettverfahren in Frage. Dabei können beide Polymerisationen entweder durch zwei unterschiedliche Polymerisationsverfahren oder aber durch das gleiche Polymerisationsverfahren erfolgen. Werden zwei unterschiedliche Polymerisationsverfahren verwendet, so ist eine beliebige Kombination der aufgeführten Polymerisationsverfahren möglich. In einer weiteren besonderen Ausführungsform wird der Blendprozess erst unmittelbar vor oder während des Spritzgussprozesses durchgeführt.

Diese Formmasse kann sowohl in Extrusions- als auch in Spritzguss- und/oder Blasformverfahren zur Herstellung von Formteilen jeglicher Art eingesetzt werden. Beispiele für die Einsatzgebiete solcher Formteile sind z.B. der Kfz-Bereich (z.B. Stoßstangen, Armaturentafeln, Innenverkleidung, Karosserieteile, Unterbodenschutzabdeckungen, Kabelschächte, Luftfilter, Abdeckungen im Innen- und Motorraum usw.), der Verpackungsbereich (z. B. Aufbewahrungs- und Lagerbehälter, Flaschen, Tuben usw.), der Möbelbereich (Garten- und Innenraummöbel wie z.B. Stühle und Tische, Schubkästen usw.), der Elektronikbereich (Verkleidungen für Elektroteile wie z.B. Gehäuse und/oder Gehäusebestandteile usw.), der Spielzeugbereich (Spielzeuge jeglicher Art, wie z.B. Spielzeugautos, zusammenbaubare Kunststoffspielzeuge, Puppen, Babyspielzeug, Konstruktionsbaukästen usw.), der Hygiene- und Medizinbereich (z.B. Zahnbürsten, Infusionsbeutel usw.), der Haushaltsbereich (z.B. Einwegbesteck bzw. -geschirr, Schalen, Küchenwerkzeuge usw.), der Textilbereich (z.B. Dekorations- oder Funktionselemente) oder der Büroartikelbereich (z. B. Stifteumhüllungen, Kugelschreiberumhüllungen, Gehäuse bzw. Gehäusebestandteile usw.)

Die Erfindung wird im Folgenden beispielhaft erläutert.

Beispiele 1 bis 8: Herstellung der Polyolefine

Unter Verwendung eines Mischkontaktes aus einem kristallinen Titantrichlorid in Form eines mit Aluminium reduzierten $TiCl_4$ ($TiCl_3 \cdot 0,33\ AlCl_3$) und Aluminiumtriisobutyl (im Gewichtsverhältnis 1 : 4) wurden die in der Tabelle 1 angegebenen Monomere in n-Butan bei der in der Tabelle 1 angegebenen Temperatur in einem Laborautoklaven polymerisiert, wobei gegebenenfalls Wasserstoff als Molmassenregler eingesetzt wurde. Es traten Drücke von 22 bis 25 bar auf. Die Monomeren Ethen und Propen wurden während der Reaktionszeit von 3 h kontinuierlich zudosiert; das Monomer 1-Buten sowie gegebenenfalls verwendete höhere Olefine wurden vorgelegt. Nach 3 h wurde die Reaktionsmischung mit Isopropanol versetzt, wodurch die Reaktion abgestoppt wurde. In einem Verdampfer wurden nicht umgesetzte Monomere sowie das Lösungsmittel n-Butan verdampft. Die Schmelze des Polyolefins wurde bei einer Temperatur von ca. 190 °C abgelassen.

Die Analyse der erhaltenen Produkte ergab Werte, die in der Tabelle 1 zusammengestellt sind.

Meßmethode 1 zur Bestimmung der Löslichkeit in Xylol:

2 g Polyolefin werden in 250 ml Xylol unter Rühren und Heizen bis zum Siedepunkt von Xylol gelöst. Nachdem 20 min unter Rückfluss gekocht wurde, lässt man die Polymerlösung auf 25°C abkühlen. Ungelöstes bzw. ausgefallenes Polyolefin wird abgenutscht (15 cm-Nutsche, Sartorius 390-Filterpapier) und getrocknet. Die überbleibende Polymerlösung wird in einem 5fachen Überschuss an Methanol (mit einem Tropfen 37-prozentiger wässriger HCl versetzt) ausgefällt. Der entstehende Niederschlag wird abgenutscht und bei 80 °C im Trockenschrank (Vakuum) getrocknet.

Meßmethode 2 zur Bestimmung von $M_w$, der Polydispersität und des Alpha-Werts:

Die zu vermessenden Proben werden in 4 ml-Vials eingewogen, mit 3 ml frisch destilliertem und mit 0,5 g Butylhydroxytoluol/Liter stabilisiertem 1,2,4-Trichlorbenzol versetzt und 20 Minuten unter leichtem Rühren bei 165 °C gelöst Die Proben werden bei 160 °C auf einer Waters 150C Hochtemperatur-GPC vermessen. Die Flussrate beträgt 1,1 ml/min; es wird eine Kombination aus drei SDV-Säulen (10e6A, 10e5A und 10e3A plus Vorsäule, 10 μm) der Firma Polymer Standards Service GmbH, D-55120 Mainz benutzt. Als Detektor dient ein integrierter Refraktionsindexdetektor der Firma Waters sowie der Viskositätsdetektor H502B der Firma Viskotek. Es wird eine universelle Kalibrierung mit Polyolefinen vorgenommen (Kalibrierkurve aus Polystyrol, Polyisobuten und Polyethylen der Firma Polymer Standards Service GmbH). Alle Proben werden doppelt eingewogen und vermessen. Die Auswertung erfolgt mit dem Softwarepaket Win_gpc6.

Tabelle 1: Beispiele 1 bis 8, Herstellung und Eigenschaften

| Beispiel | $^{13}$C-NMR | | Reaktionsparameter | | Nadel-penetration [0,1 mm] | DSC | | | GPC | | | η bei 190 °C [mPa•s] | Löslich-keit in Xylol |
|---|---|---|---|---|---|---|---|---|---|---|---|---|---|
| | Monomer-einheiten | Gehalt [Gew.-%] | Reaktions-temperatur [°C] | H$_2$-Menge [Normliter] | | T$_g$ [°C] | Schmelz-enthalpie [J/g] | Ende des Schmelz-bereichs [°C] | M$_w$ (g/mol) | Poly-dispersität | Alpha | | |
| 1 | Ethen Propen 1-Buten | 10 61 29 | 85 | 1 | 22 | -34 | 2,3 | 112 | 133.000 | 5,3 | 0,71 | 221.000 | 99,3 |
| 2 | Ethen Propen 1-Buten | 14 57 29 | 86 | 0,75 | 21 | -35 | 2,1 | 114 | 170.000 | 6,1 | 0,69 | 355.000 | 99,1 |
| 3 | Ethen Propen 1-Buten | 13 70 17 | 86 | 0,5 | 16 | -31 | 7,1 | 115 | 203.000 | 7,4 | 0,77 | 529.000 | 99,5 |
| 4 | 1-Buten | 100 | 96 | 0,25 | 12 | -29 | 12 | 110 | 95.200 | 7,3 | 0,69 | 910.000 | 98,9 |
| 5 | Ethen 1-Buten | 7,2 92,8 | 96 | 0,25 | 15 | -34 | 5,5 | 99 | 96.200 | 6,4 | 0,74 | 730.000 | 99,3 |
| 6 | Propen 1-Buten | 59 41 | 90 | 0,125 | 16 | -20 | 9,0 | 116 | 195.000 | 8,6 | 0,68 | 2.400.000 | 94,5 |
| 7 | 1-Buten | 100 | 96 | 0,125 | 15 | -30 | 9,7 | 110 | 178.000 | 5,9 | 0,71 | 2.500.000 | 98,8 |
| 8 | Ethen Propen 1-Octen | 9 46 45 | 105 | 0 | 38 | -38 | 3,2 | 125 | 337.000 | 22 | 0,63 | 920.000 | 90,2 |

EP 1 871 814 B1

Beispiel 9:

Auf einem ENTEX-Extruder wurden bei 190 °C und einer Mischzeit von 10 Minuten Mischungen von Sabic PP 520P, einem isotaktischen Polypropylen, und dem Produkt aus Beispiel 1 in verschiedenen Mengenverhältnissen hergestellt. Details und Ergebnisse sind in der Tabelle 2 wiedergegeben.

Beispiel 10:

Wie Beispiel 9; statt des Produkts aus Beispiel 1 wurde das Produkt aus Beispiel 2 verwendet Details und Ergebnisse sind in der Tabelle 3 wiedergegeben.

Man erkennt bei den Beispielen 9 und 10, dass im Bereich geringer Beimischung des erfindungsgemäßen Polyolefins (bis ca. 30 Gew.-%) sich die Reißdehnung erheblich verbessert und der Glasübergangspunkt $T_g$ stärker erniedrigt wird als es dem Zusammensetzungsverhältnis entspricht. Die Reißdehnung ist relevant z.B. für Folien, während die Lage von $T_g$ die Tieftemperaturschlagzähigkeit stark beeinflusst. Der Schmelzfluss wird in diesem Bereich überraschenderweise verringert, weshalb sich derartige Formmassen gut für die Extrusion eignen.

Tabelle 2: Beispiel 9; Mischungen und Ergebnisse

| Erfindungsgemäßes PO[Gew.-%] | Blendpartner [Gew.-%] | E-Modul [MPa] | Zugfestigkeit [MPa] | Reißdehnung [%] | $T_g$ [°C] | MFR$_{190°C}$ [g/10 min.] |
|---|---|---|---|---|---|---|
| aus Beispiel 1 | Sabic PP 520 P | DIN ISO 527/V | DIN ISO 527/V | DIN ISO 527/V | DIN 53765 | DIN ISO 1133 |
| 0 | 100 | 1700 | 36 | 14 | -2 | 13 |
| 10 | 90 | 1235 | 23 | 434 | -15 | 9 |
| 30 | 70 | 671 | 13,5 | 706 | -30 | 9 |
| 50 | 50 | 239 | 7 | 740 | -31 | 17 |
| 70 | 30 | 74 | 3 | 734 | -32 | 30 |
| 100 | 0 | n.b.[1] | 2 | 755 | -35 | 73 |
| [1] n.b. = nicht bestimmt | | | | | | |

Tabelle 3: Beispiel 10; Mischungen und Ergebnisse

| Erfindungsgemäßes PO[Gew.-%] | Blendpartner [Gew.-%] | E-Modul [MPa] | Zugfestigkeit [MPa] | Reißdehnung [%] | $T_g$ [°C] | MFR$_{190°C}$ [g/10 min.] |
|---|---|---|---|---|---|---|
| aus Beispiel 2 | Sabic PP 520 P | DIN ISO 527/V | DIN ISO 527/V | DIN ISO 527/V | DIN 53765 | DIN ISO 1133 |
| 0 | 100 | 1700 | 36 | 14 | -2 | 13 |
| 10 | 90 | 1210 | 26 | 413 | -20 | 11 |
| 30 | 70 | 616 | 17,5 | 780 | -31 | 9 |
| 50 | 50 | 236 | 11,4 | 820 | -31 | 12 |
| 70 | 30 | 67 | 8 | 810 | -33 | 23 |
| 100 | 0 | n.b.[1] | 2 | 814 | -35 | 62 |
| [1] n.b. = nicht bestimmt | | | | | | |

Beispiel 11:

Entsprechend Beispiel 10 wurde ein Blend hergestellt und die Kerbschlagzähigkeit bei 23 °C gemessen. Details und Ergebnisse im Vergleich mit reinem isotaktischem Polypropylen gehen aus der Tabelle 4 hervor.

Beispiel 12:

Entsprechend Beispiel 11 wurde ein Blend hergestellt; jedoch wurde hier nicht das Produkt aus Beispiel 2, sondern das Produkt aus Beispiel 3 eingesetzt. Anschließend wurde die Kerbschlagzähigkeit bei 23 °C gemessen. Details und Ergebnisse im Vergleich mit reinem isotaktischem Polypropylen gehen aus der Tabelle 5 hervor.

Tabelle 4: Beispiel 11; Mischung und Ergebnisse

| Erfindungsgemäßes PO [Gew.-%) | Blendpartner [Gew.-%] | Kerbschlagzähigkeit 23 °C [kJ/m$^2$] |
|---|---|---|
| aus Beispiel 2 | Sabic PP 520 P | DIN EN ISO 179 |
| 0 | 100 | 2,2 |
| 50 | 50 | 32 |

Tabelle 5: Beispiel 12; Mischung und Ergebnisse

| Erfindungsgemäßes PO [Gew.-%) | Blendpartner [Gew.-%] | Kerbschlagzähigkeit 23 °C [kJ/m$^2$] |
|---|---|---|
| aus Beispiel 3 | Sabic PP 520 P | DIN EN ISO 179 |
| 0 | 100 | 2,2 |
| 50 | 50 | 40 |

**Patentansprüche**

1. Polyolefin, das folgende Monomereinheiten enthält:

   a) maximal 25 Gew.-% Einheiten, die sich von Ethen herleiten,
   b) maximal 75 Gew.-% Einheiten, die sich von Propen herleiten, sowie
   c) 5 bis 100 Gew.-% Einheiten, die sich von einem $\alpha$-Olefin mit 4 bis 20 C-Atomen herleiten,

   wobei das Polyolefin folgende Parameter aufweist:

   d) ein gewichtsmittleres Molekulargewicht im Bereich von 70.000 bis 10.000.000 g/mol,
   e) eine Polydispersität im Bereich von 4 bis 60,
   f) eine Schmelzviskosität, gemessen durch Oszillationsrheometrie mit einer Schergeschwindigkeit von 1 Hz bei 190 °C, im Bereich von 100.000 bis 100.000.000 mPa•s,
   g) eine Nadelpenetration im Bereich von 3 bis 70 • 0,1 mm,
   h) eine Schmelzenthalpie im Bereich von 2 bis 100 J/g,
   i) eine Glasübergangstemperatur $T_g$ im Bereich von -15 °C bis -80 °C, sowie
   j) ein Ende des Schmelzbereichs des kristallinen Anteils im Bereich von 85 bis 175 °C.

2. Polyolefin gemäß Anspruch 1,
   **dadurch gekennzeichnet,**
   **dass** das gewichtsmittlere Molekulargewicht mindestens 100.000 g/mol beträgt.

3. Polyolefin gemäß einem der Ansprüche 1 und 2, erhältlich durch Polymerisation von $\alpha$-Olefin-Monomeren mit einem TiCl$_3$ • (AlCl$_3$)$_n$-Mischkatalysator, wobei n = 0,2 bis 0,5, sowie einer Trialkylaluminiumverbindung als Cokatalysator mit einem molaren Verhältnis von Katalysator zu Cokatalysator von 1 : 1 bis 1 : 10.

4. Polyolefin gemäß einem der Ansprüche 1 bis 3,
   **dadurch gekennzeichnet,**
   **dass** es einen Alpha-Wert im Bereich von 0,5 bis 0,9 besitzt.

**5.** Polyolefinzusammensetzung, die folgende Komponenten enthält:

I. 0,1 bis 99,9 Gew.-% des Polyolefins gemäß einem der Ansprüche 1 bis 4 sowie
II. 99,9 bis 0,1 Gew.-% eines Polyolefins, ausgewählt aus der Gruppe Ethylenpolymerisat, isotaktisches Polypropylenpolymerisat, syndiotaktisches Polypropylenpolymerisat, isotaktisches Poly-1-buten und syndiotaktisches Poly-1-buten,

wobei sich die Prozentangaben auf die Mischung der Komponenten I und II beziehen.

**6.** Polyolefinzusammensetzung gemäß Anspruch 5,
**dadurch gekennzeichnet,**
**dass** die Komponente gemäß II. eine Mischung ist aus einem Ethylenpolymerisat und einem Polyolefin, ausgewählt aus der Gruppe isotaktisches Polypropylenpolymerisat, syndiotaktisches Polypropylenpolymerisat, isotaktisches Poly-1-buten und syndiotaktisches Poly-1-buten.

**7.** Formmasse aus einer Polymerzusammensetzung gemäß einem der Ansprüche 5 und 6 zur Herstellung von Formteilen.

**8.** Formmasse gemäß Anspruch 7,
**dadurch gekennzeichnet,**
**dass** sie folgende Komponenten enthält:

I. 0,1 bis 50 Gew.-% des Polyolefins gemäß Anspruch 1 sowie
II. 99,9 bis 50 Gew.-% eines isotaktischen oder syndiotaktischen Propylenpolymerisats,

wobei sich die Prozentangaben auf die Mischung der Komponenten I und II beziehen.

**9.** Verwendung der Polyolefinzusammensetzung gemäß einem der Ansprüche 5 und 6 bzw. der Formmasse gemäß einem der Ansprüche 7 und 8 zur Herstellung von Formteilen.

**10.** Verwendung des Polyolefins gemäß einem der Ansprüche 1 bis 4 zur Herstellung von Dichtungsbahnen.

**11.** Formteil, hergestellt gemäß Anspruch 9.

**12.** Dichtungsbahn, hergestellt gemäß Anspruch 10.

**Claims**

**1.** Polyolefin which contains the following monomer units:

a) not more than 25% by weight of units which are derived from ethene,
b) not more than 75% by weight of units which are derived from propene and
c) from 5 to 100% by weight of units which are derived from an $\alpha$-olefin having 4 to 20 carbon atoms,

the polyolefin having the following parameters:

d) a weight-average molecular weight in the range of from 70 000 to 10 000 000 g/mol,
e) a polydispersity in the range of from 4 to 60,
f) a melt viscosity, measured by oscillation rheometry at a shear rate of 1 Hz at 190°C, in the range of from 100 000 to 100 000 000 mPa•s,
g) a needle penetration in the range of from 3 to 70 • 0.1 mm,
h) an enthalpy of fusion in the range of from 2 to 100 J/g,
i) a glass transition temperature $T_g$ in the range of from -15°C to -80°C and
j) a final melting point of the crystalline fraction in the range of from 85 to 175°C.

**2.** Polyolefin according to claim 1, **characterized in that** the weight-average molecular weight is at least 100 000 g/mol.

3.  Polyolefin according to either one of claims 1 and 2, obtainable by polymerization of $\alpha$-olefin monomers using a TiCl$_3 \bullet$ (AlCl$_3$)$_n$ mixed catalyst, n being from 0.2 to 0.5, and a trialkylaluminum compound as cocatalyst with a molar ratio of catalyst to cocatalyst of from 1:1 to 1:10.

4.  Polyolefin according to any one of claims 1 to 3, **characterized in that** it has an alpha value in the range of from 0.5 to 0.9.

5.  Polyolefin composition which contains the following components:

    I. from 0.1 to 99.9% by weight of the polyolefin according to any one of claims 1 to 4 and
    II. from 99.9 to 0.1% by weight of a polyolefin selected from the group consisting of ethylene polymer, isotactic polypropylene polymer, syndiotactic polypropylene polymer, isotactic poly-1-butene and syndiotactic poly-1-butene,

    the stated percentages being based on the blend of components I and II.

6.  Polyolefin composition according to claim 5, **characterized in that** the component according to II. is a mixture of an ethylene polymer and a polyolefin selected from the group consisting of isotactic polypropylene polymer, syndiotactic polypropylene polymer, isotactic poly-1-butene and syndiotactic poly-1-butene.

7.  Molding material comprising a polymer composition according to either of claims 5 and 6 for the production of shaped articles.

8.  Molding material according to claim 7, **characterized in that** it contains the following components:

    I. from 0.1 to 50% by weight of the polyolefin according to claim 1 and
    II. from 99.9 to 50% by weight of an isotactic or syndiotactic propylene polymer,

    the stated percentages being based on the mixture of components I and II.

9.  Use of the polyolefin composition according to either of claims 5 and 6 or of the molding material according to either of claims 7 and 8 for the production of shaped articles.

10. Use of the polyolefin according to any of claims 1 to 4 for the production of sealing sheets.

11. Shaped article produced according to claim 9.

12. Sealing sheet produced according to claim 10.


**Revendications**

1.  Polyoléfine qui contient les unités monomères suivantes :

    a) au maximum 25% en poids d'unités qui sont dérivées d'éthylène,
    b) au maximum 75% en poids d'unités qui sont dérivées de propylène, ainsi que
    c) 5 à 100% en poids d'unités qui sont dérivées d'une $\alpha$-oléfine comprenant 4 à 20 atomes de carbone,

    la polyoléfine présentant les paramètres suivantes :

    d) un poids moléculaire pondéral moyen dans la plage de 70 000 à 10 000 000 g/mole,
    e) une polydispersité dans la plage de 4 à 60,
    f) une viscosité en masse fondue, mesurée par une rhéométrie par oscillation à une vitesse de cisaillement de 1 Hz à 190°C, dans la plage de 100 000 à 100 000 000 mPa.s,
    g) une pénétration d'aiguille dans la plage de 3 à 70*0,1 mm,
    h) une enthalpie de masse fondue dans la plage de 2 à 100 J/g,
    i) une température de transition vitreuse $T_g$ dans la plage de -15°C à -80°C, ainsi que
    j) une fin de la zone de fusion de la proportion cristalline dans la plage de 85 à 175°C.

**2.** Polyoléfine selon la revendication 1, **caractérisée en ce que** le poids moléculaire pondéral moyen est d'au moins 100 000 g/mole.

**3.** Polyoléfine selon l'une quelconque des revendications 1 et 2, pouvant être obtenue par polymérisation de monomères de type $\alpha$-oléfine avec un catalyseur mixte $TiCl_3 \cdot (AlCl_3)_n$, où n = 0, 2 à 0, 5, ainsi qu'un composé de type trialkylaluminium comme cocatalyseur avec un rapport molaire de catalyseur à cocatalyseur de 1:1 à 1:10.

**4.** Polyoléfine selon l'une quelconque des revendications 1 à 3, **caractérisée en ce qu'**elle présente une valeur alpha dans la plage de 0,5 à 0,9.

**5.** Composition de polyoléfines, qui contient les composants suivants :

I. 0,1 à 99,9% en poids de la polyoléfine selon l'une quelconque des revendications 1 à 4 ainsi que
II. 99,9 à 0,1% en poids d'une polyoléfine choisie dans le groupe formé par le polymère d'éthylène, le polymère isotactique de polypropylène, le polymère syndiotactique de polypropylène, le poly-1-butène isotactique et le poly-1-butène syndiotactique,

les indications en % se rapportant au mélange des composants I et II.

**6.** Composition de polyoléfines selon la revendication 5, **caractérisée en ce que** le composant selon II est un mélange d'un polymère d'éthylène et d'une polyoléfine, choisie dans le groupe formé par le polymère isotactique de polypropylène, le polymère syndiotactique de polypropylène, le poly-1-butène isotactique et le poly-1-butène syndiotactique.

**7.** Masse de moulage en une composition polymère selon l'une quelconque des revendications 5 et 6 destinée à la production de pièces moulées.

**8.** Masse de moulage selon la revendication 7, **caractérisée en ce qu'**elle contient les composants suivants :

I. 0,1 à 50% en poids de la polyoléfine selon la revendication 1 ainsi que
II. 99,9 à 50% en poids d'un polymère de propylène isotactique ou syndiotactique,

les indications en % se rapportant au mélange des composants I et II.

**9.** Utilisation de la composition de polyoléfines selon l'une quelconque des revendications 5 et 6 ou de la masse de moulage selon l'une quelconque des revendications 7 et 8 pour la production de pièces moulées.

**10.** Utilisation de la polyoléfine selon l'une quelconque des revendications 1 à 4 pour la production de feuilles d'étanchéité.

**11.** Pièce moulée produite selon la revendication 9.

**12.** Feuille d'étanchéité produite selon la revendication 10.

**EP 1 871 814 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1442831 A
- DE 1520249 A
- DE 1520289 A
- DE 1795620 A
- DE 2306667 A
- DE 2930108 A
- DE 10031293 A
- EP 0335484 A
- DE 2637990 A
- JP 2000198892 A
- JP 58089635 A
- JP 45012225 A
- DE 1104694 A
- WO 03076511 A
- EP 1176169 A

**In der Beschreibung aufgeführte Nicht-Patentliteratur**

- **H. G. ELIAS.** Makromoleküle. Wiley-VCH, 2001, vol. 2
- **Z. GRUBISIC ; P. REMPP ; H. BENOIT.** *Polym. Lett.,* 1967, vol. 5, 753
- **K.A. BONI ; F.A. SLIEMERS ; P.B. STICKNEY.** *J.Polym.Sci.;A,* 1968, vol. 2 (6), 1579
- **D. GOEDHART ; A. OPSCHOOR.** *J.Polym.Sci.;A,* 1970, vol. 2 (8), 1227
- **A. RUDIN ; H.L.W. HOEGY.** *J.Polym.Sci.;A,* 1972, vol. 1 (10), 217
- **G. SAMAY ; M. KUBIN ; J. PODESVA.** *Angew. Makromol. Chem.,* 1978, vol. 72, 185
- **B. IVAN ; Z. LASZLO-HEDVIG ; T. KELEN ; F. TÜDOS.** *Polym. Bull.,* 1982, vol. 8, 311
- **K.-Q. WANG ; S.-Y. ZHANG ; J. XU ; Y. LI ; H.P. LI.** *J. Liqu. Chrom.,* 1982, vol. 5, 1899
- **T.G. SCHOLTE ; H.M. SCHOFFELEERS ; A.M.G. BRANDS.** *J. Appl. Polym. Sci.,* 1984, vol. 29, 3763
- **H.-G. ELIAS.** Makromoleküle. Wiley-VCH, 2001, vol. 2, 411-413
- **N.P.CHEREMISINOFF.** An Introduction to Polymer Rheology and Processing. CRC Press, 1993
- **R.S.LENK.** Rheologie der Kunststoffe. C.Hanser Verlag, 1971
- Rheologisches Verhalten von Kunststoff-Schmelzen und -Lösungen. **J.MEISSNER.** Praktische Rheologie der Kunststoffe. VDI-Verlag, 1978
- **J.-F. JANSSON.** *Proc.8th.Int.Congr.Rheol.,* 1980, vol. 3